# EUROPEAN PATENT APPLICATION

(11) **EP 4 353 859 A1**
(43) Date of publication of application: **17.04.2024**
(21) Application number: 22820223.0
(22) Date of filing: 07.06.2022
(51) Int. Cl.: C22C 30/00, B22F 3/105, B22F 3/16, B22F 10/43

(54) **ALLOY MATERIAL, ALLOY PRODUCT USING ALLOY MATERIAL, AND MACHINE DEVICE PROVIDED WITH ALLOY PRODUCT**

(30) Priority: 08.06.2021 JP 2021096053
(71) Applicant: Proterial, Ltd., Tokyo 135-0061 (JP)
(72) Inventor: KIMURA, Tatsuya, Tokyo 135-0061 (JP); SHIRATORI, Hiroshi, Tokyo 135-0061 (JP); KUWABARA, Kousuke, Tokyo 135-0061 (JP)
(74) Representative: MERH-IP Matias Erny Reichl Hoffmann Patentanwälte PartG mbB
(86) International application number: PCT/JP2022/022984
(87) International publication number: WO 2022/260044

(57) **Abstract**

Provided is an alloy material that can improve mechanical properties in a high-temperature environment, an alloy product using the alloy material, and a machine device provided with the alloy product.

The alloy material is an alloy material containing each of Co, Cr, Fe, and Ni in a range of 5 at% to 40 at%, Mo in a range of more than 0 at% and 8 at% or less, Ti in a range of 1 at% to 1 0 at%, and B in a range of more than 0 at% and less than 0.15 at% with a remainder consisting of inevitable impurities. This alloy material may contain B in a range of 0.03 at% to 0.12 at% and may contain at least one of Ta and Nb in a range of 4 at% or less. Preferably, the Ti and the at least one of Ta and Nb are contained at a total of 3 at% to 10 at%.

## Description

### Technical Field

The present invention relates to an alloy material referred to as a high entropy alloy, an alloy product using the alloy material, and a machine device provided with the alloy product.

### Background Art

In recent years, high entropy alloys (HEAs) and multi-principal element alloys (MPEAs) have been proposed as alloys with a new technical concept that is different from the concept of conventional alloys (e.g., alloys with trace amounts of several kinds of subcomponent elements added to one to three kinds of main component elements).

HEA and MPEA are defined as alloys composed of at least four kinds of principal metal elements (each of which does not account for the majority, for example, ratio of each of which is in a range of 5 at% (% by atom) or more and 35 at% or less). It is known that HEAs and MPEAs exhibit the following characteristics, for example: (a) stabilization of the mixed state due to a negative increase in the mixing entropy term in the Gibbs free energy equation; (b) delayed diffusion due to complex microstructures; (c) improvement of mechanical properties due to high lattice strain caused by size difference of constituent atoms; and (d) improvement of heat resistance due to combination effects (also referred to as "cocktail effects") due to the coexistence of many kinds of elements.

For example, Patent Literature 1 describes, as an alloy member or alloy product composed of HEA or MPEA, an alloy member using a high entropy alloy, which contains each of cobalt (Co), nickel (Ni), chromium (Cr), iron (Fe), and titanium (Ti) elements in a range of 5 at% to 35 at% and molybdenum (Mo) in a range of more than 0 at% to 8 at%, and in which the remainder consists of inevitable impurities, and microscopic particles having an average particle diameter of 40 nm or less are dispersed and precipitated in the matrix phase crystal. According to Patent Literature 1, it is possible to provide an alloy member with excellent homogeneity in alloy composition and microstructure and excellent shape controllability by using a high entropy alloy having high mechanical strength.

Patent Literature 2 discloses an alloy material using a high entropy alloy that includes each of the elements of Co, Cr, Fe, Ni, and Ti in the range of 5 at% to 35 at%, Mo in the range of more than 0 at% and less than 8 at%, and elements having atomic radii larger than those of Co, Cr, Fe, and Ni in the range of more than 0 at% and at most 4 at% with the remainder comprising inevitable impurities. According to Patent Literature 2, an alloy material that allows an alloy product to exhibit high mechanical properties can be provided by adding at least one of Ta, Nb, Hf, Zr, and Y as elements with larger atomic radii to the alloy of Patent Literature 1 as a base alloy.

### Citation List

### Patent Literature

Patent Literature 1: WO2017/138191 A1
Patent Literature 2: WO2019/088157 A1

### SUMMARY of Invention

### Technical Problem

It is said that microscopic particles are dispersed and precipitated in the matrix phase crystal grains in conventional alloy materials using a high entropy alloy, including those disclosed in Patent Literature 1 and Patent Literature 2; thus, the mechanical properties of an alloy product are equivalent to or better than other Ni-based alloys, stainless steel, and the like. However, alloy products using these alloy materials tend to have reduced mechanical properties (e.g., tensile strength and rupture elongation) in high-temperature environments of, for example, about 700°C. Among these, there is a problem that the rupture elongation is low in a high-temperature environment of about 700°C, for example, in an alloy processed product in which pseudo-solutionizing heat treatment is applied to an additively manufactured product formed by an additive manufacturing process from an alloy powder (alloy material) using a conventional high entropy alloy.

Therefore, it is an object of the present invention to provide an alloy material that can improve mechanical properties in a high-temperature environment, an alloy product using the alloy material, and a machine device provided with the alloy product.

### Solution to Problem

(I) One aspect of the present invention is an alloy material characterized by containing each of Co, Cr, Fe, and Ni in a range of 5 at% to 40 at%, Mo in a range of more than 0 at% and 8 at% or less, Ti in a range of 1 at% to 10 at%, B in a range of more than 0 at% and less than 0.15 at%, and at least one of Ta and Nb at 4 at% or less, or none of Ta and Nb with a remainder consisting of inevitable impurities.

In the present invention, the following improvements and changes can be added to the alloy material (I):
(i) the alloy material contains the B in a range of 0.03 at% to 0.12 at%;
(ii) the alloy material contains the at least one of Ta and Nb at 4 at% or less;
(iii) the alloy material contains the Ti and the at least one of Ta and Nb at 3 at% to 10 at% in total; and
(iv) the alloy material contains the Co in a range of 25 at% to 38 at%, the Cr in a range of 16 at% to 23 at%, the Fe in a range of 12 at% to 20 at%, the Ni in a range of 17 at% to 28 at%, the Mo in a range of 1 at% to 7 at%, and the Ti in a range of 2 at% to 9 at%.

(II) Another aspect of the present invention is an alloy product using the above-described alloy material, characterized in that
microscopic particles having an average particle diameter of 130 nm or less are dispersed and precipitated in matrix phase crystal grains of the alloy product.

(III) Another aspect of the present invention is a machine device provided with the above-described alloy product.

The present description includes part or all of the contents as disclosed in the description and/or drawings of Japanese Patent Application No. 2021-096053, which is a priority document of the present application.

### Advantageous Effects of Invention

According to the present invention, the mechanical properties of an alloy material, an alloy product using the alloy material, and a machine device provided with the alloy product in high-temperature environments can be improved.

### Brief Description of Drawings

[Figure 1] Figure 1 is a schematic process diagram showing an example of a method for manufacturing an alloy product according to the embodiment.
[Figure 2A] Figure 2A is a secondary electron image obtained by SEM observation of a treated cross-section of a cut piece of the alloy processed piece W1.
[Figure 2B] Figure 2B is a secondary electron image obtained by SEM observation of a treated cross-section of a cut piece of the alloy processed piece W3.
[Figure 3A] Figure 3A is an electron diffraction pattern of matrix phase crystal grains obtained by STEM observation.
[Figure 3B] Figure 3B is a dark field image (DF-STEM) of matrix phase crystal grains obtained by STEM observation.
[Figure 4] Figure 4 shows images each indicating the results of the elemental mapping of microscopic particles in the matrix phase crystal grains using energy dispersive X-ray spectroscopy (EDX).
[Figure 5] Figure 5 shows images each representing the BO₂⁻ ion intensity distribution obtained by qualitative evaluation of elemental distribution by secondary ion mass spectroscopy (SIMS).
[Figure 6] Figure 6 is a graph showing the BO₂⁻ ion intensity distribution at each position along the arrow inserted in the BO₂⁻ion intensity distribution in each image of Figure 5.

### Description of Embodiments

The present inventors examined various applications based on conventional alloy materials. As a result, it was confirmed that the mechanical properties of the alloy products decreased as the environmental temperature increased. As a result of various investigations and considerations on the cause, it was thought that this phenomenon is affected by the decrease in the strength of the grain boundary, which is the origin of fracture, as the environmental temperature rises. Based on this, the present inventors have conceived of the idea that by setting the composition to a specific composition, the strength of the grain boundary can be improved, and the mechanical properties of alloy products in high-temperature environments can be improved. The present invention has been made based on these findings.

### (Basic Idea of the Present Invention)

As described above, alloy products manufactured from alloy materials using conventional high entropy alloys tend to have lower mechanical properties as the environmental temperature increases. As a result of various investigations and considerations on the cause, it was thought that this phenomenon is affected by the decrease in the strength of the grain boundary as the environmental temperature rises.

Meanwhile, from the viewpoint of reliability of alloy products, it is preferable that alloy products have high mechanical properties even in high-temperature environments (e.g., 700°C). To this end, it is desirable to improve the strength of the grain boundary that can become the origin of fracture in a high-temperature environment.

Therefore, the present inventors intensively studied changes in the metallographic structure and changes in the mechanical properties of alloy products in high-temperature environments when different elements are added to improve the strength of grain boundaries. As a result, it has been found that the strength of grain boundaries can be improved by allowing an alloy material to contain B (boron) in an appropriate range. This made it possible to improve mechanical properties (e.g., tensile strength and rupture elongation) in high-temperature environments. The present invention is based on the findings and results described above.

Hereinafter, the embodiment according to the alloy material, the alloy product, and the machine device of the present invention will be specifically described with reference to the drawings. It should be noted that the present invention is not limited to the embodiment mentioned herein and can be appropriately combined with known techniques or improved based on known techniques without departing from the technical idea of the present invention.

### [Composition of Alloy Material]

The alloy material according to the embodiment contains each of Co, Cr, Fe, and Ni in a range of 5 at% to 40 at%, Mo in a range of more than 0 at% and 8 at% or less, Ti in a range of 1 at% to 10 at%, B in a range of more than 0 at% and less than 0.15 at%, and at least one of Ta and Nb at 4 at% or less, or none of Ta and Nb with a remainder consisting of inevitable impurities.

Co, Cr, Fe, and Ni are basically the main component elements that constitute the matrix phase crystal grains of the alloy material or alloy product and are considered to contribute to improving corrosion resistance due to the cocktail effects. The contents of these component elements in the alloy material will be specifically described below. The upper and lower limits of the component elements described below can be arbitrarily combined. In addition, preferable, more preferable, and still more preferable ranges can also be combined as appropriate.

The content of Co is preferably 20 at% to 40 at% (20 at% or more and 40 at% or less), more preferably 25 at% to 38 at%, still more preferably 30 at% to 36 at%.

The content of Cr is preferably 10 at% to 25 at%, more preferably 16 at% to 23 at%, still more preferably 18 at% to 21 at%.

The content of Fe is preferably 10 at% to 25 at%, more preferably 12 at% to 20 at%, still more preferably 14 at% to 17 at%.

The content of Ni is preferably 15 at% to 30 at%, more preferably 17 at% to 28 at%, still more preferably 21 at% to 26 at%.

Mo is considered to contribute to improving corrosion resistance together with Cr. The Mo content in the alloy material is more preferably 1 at% to 7 at%, still more preferably 2 at% to 5 at%.

Ti is a component that constitutes microscopic particles dispersed and precipitated in the matrix phase crystal grains and is thought to contribute to improving the strength of the alloy material. However, when the content of Ti becomes high, coarse grain growth and, agglomeration and precipitation of a specific intermetallic compound phase are likely to be induced. Therefore, specifically, the content of Ti in the alloy material should be 1 at% to 10 at%. It is preferably 1 at% to 9 at%, more preferably 2 at% to 9 at%, still more preferably 2 at% to 7 at%, even still more preferably 2 at% to 5 at%.

It is believed that B (boron) contributes to the enhancement of the strength of the grain boundaries by producing effects such as improving the electronic structure of the grain boundaries. Therefore, in a case in which the alloy material contains B in a range of more than 0 at% and less than 0.15 at%, the mechanical properties of the alloy product in a high-temperature environment can be improved. In a case in which the content of B is less than 0.15 at%, it is possible to suppress the formation of coarse precipitates in the alloy product and to suppress the deterioration of the mechanical properties of the alloy product in a roomtemperature environment. In addition, in this case, it is possible to suppress the formation of cracks caused by the inclusion of B in the compact not only when processing the additively manufactured product (compact) in the additive manufacturing process but also when forming the compact in other processes. Although the above-described effects can be obtained even with a minute amount (about 0.01 at%) of B (boron), the content of B is preferably 0.03 at% to 0.12 at%, more preferably 0.05 at% to 0.10 at%. Further, when B is added in an amount of 0.15 at% or more, coarse particles may be formed, and mechanical properties, particularly elongation, may be lowered regardless of temperature.

The alloy material may further contain at least one of Ta and Nb. By adding at least one of Ta and Nb having a large atomic size, the mechanical properties of the alloy product using the alloy material can be further improved by solid-solution strengthening. Furthermore, it also has the effect of strengthening the passive film of the alloy material, thereby improving pitting resistance. Meanwhile, since Ta and Nb, like Ti, are components that form a predetermined intermetallic compound phase, it is preferable to control the precipitation of the intermetallic compound phase by setting the total amount of Ta, Nb, and Ti to a predetermined value or less. Therefore, when the alloy material contains at least one of Ta and Nb, the content of at least one of Ta and Nb (if both Ta and Nb are contained, the total content of Ta and Nb) is preferably in a range of more than 0 at% and 4 at% or less. It is more preferably in a range of 0.5 at% to 3 at%, more preferably in a range of 1 at% to 2.5 at%. In a case in which the alloy material contains at least one of Ta and Nb at 4 at% or less, the total amount of Ti and at least one of Ta and Nb is preferably 3 at% to 10 at% to control the precipitation amount of an intermetallic compound containing both Ti and at least one of Ta and Nb. Among alloy materials further containing at least one of Ta and Nb, those further containing Ta are preferable. This is because by further including Ta, the passive film formed by CrMo can be strengthened, and the corrosion resistance of the alloy can be improved.

It is more preferable that the alloy material contains, as main components, Co in a range of 25 at% to 38 at%, Cr in a range of 16 at% to 23 at%, Fe in a range of 12 at% to 20 at%, and Ni in a range of 17 at% to 28 at%, and as sub-components, Mo in a range of 1 at% to 7 at% and Ti in a range of 2 at% to 9 at%.

The term "inevitable impurity" refers to a component element that is difficult to remove entirely but is desirable to reduce as much as possible. Examples of the inevitable impurity include silicon (Si), phosphorus (P), sulfur (S), nitrogen (N), and oxygen (O). The total content of inevitable impurities contained in the alloy material is preferably 1 % by mass or less. In other words, the total content of the component elements to be intentionally included in the alloy material is preferably 99% by mass or more. Hereinafter, the content of inevitable impurities contained in the alloy material will be explained in more detail.

The content of Si is preferably 0.2% by mass or less, more preferably 0.1% by mass or less, still more preferably 0.05% by mass or less. The content of P is preferably 0.1% by mass or less, more preferably 0.05% by mass or less, still more preferably 0.02% by mass or less. The content of S is preferably 0.1% by mass or less, more preferably 0.05% by mass or less, still more preferably 0.02% by mass or less. The content of N is preferably 0.1% by mass or less, more preferably 0.05% by mass or less, still more preferably 0.02% by mass or less. The content of O is preferably 0.2% by mass or less, more preferably 0.1% by mass or less, still more preferably 0.05% by mass or less.

### [Alloy Product using Alloy Material]

An alloy product according to the embodiment is an alloy product using the alloy material according to the embodiment described above, which has a microstructure including matrix phase crystal grains. In the alloy product, since the alloy material contains B, the strength of grain boundaries can be improved. Therefore, it is an alloy product with improved mechanical properties in high-temperature environments.

### (Microstructure)

The microstructure of the alloy product is not particularly limited as long as it includes matrix phase crystal grains; however, it is preferable that microscopic particles are dispersed and precipitated in the matrix phase crystal grains. This is because mechanical properties and the like can be further improved. An alloy product by additive manufacturing is characterized in that microscopic particles tend to be precipitated.

Microscopic particles are crystalline particles of the L1₂ type ordered phase in which specific component elements are more concentrated than in other parts of matrix phase crystal grains; for example, crystalline particles in which Ni and Ti are more concentrated than in other parts of matrix phase crystal grains. The average particle diameter of microscopic particles is, for example, preferably 130 nm or less, more preferably 10 nm to 130 nm, still more preferably 20 nm to 100 nm. This is because when the average particle diameter of microscopic particles is in these ranges, mechanical properties and the like can be furthermore improved. Here, the average particle diameter of microscopic particles is obtained by, for example, selecting at least five microscopic particles having maximum diameters (maximum lengths) of 5 nm or more in an observation image such as a dark field image (DF-STEM) of matrix phase crystal grains obtained by STEM observation, measuring the maximum diameters (maximum lengths) of the at least five microscopic particles, and calculating an average of the maximum diameters as the average particle diameter.

The matrix phase crystal grains are not particularly limited but preferably have a face-centered cubic (FCC) crystal structure and an average crystal grain diameter of 300 µm or less. This is because since a face-centered cubic is a kind of close-packed structure, mechanical properties and the like can be improved in a case in which matrix phase crystal grains have a face-centered cubic crystal structure. In a case in which the average crystal grain diameter is 300 µm or less, mechanical properties, corrosion resistance, and the like can be improved. The average crystal grain diameter is preferably 200 µm or less, more preferably 150 µm or less. This is because mechanical properties, corrosion resistance, and the like can be further improved. The crystal structure of matrix phase crystal grains may include simple cubic (SC) crystals in addition to face-centered cubic crystals.

The alloy product according to the embodiment is preferably a member that requires high mechanical properties in high-temperature environments such that mechanical properties can be improved in high-temperature environments. Preferred examples of such a member include turbine members such as turbine blades, boiler members, engine members, nozzle members, structural members for plants such as casings, pipes, and valves, structural members for generators, structural members for nuclear reactors, structural members for aerospace, members for hydraulic equipment, and mechanical members for various equipment such as bearings, pistons, gears, an rotating shafts. Further, other members, such as impellers, may be used as alloy products.

### [Machine Device Provided with Alloy Product]

The machine device according to the embodiment is preferably a machine device that requires high mechanical properties in high-temperature environments such that mechanical properties can be improved in high-temperature environments. Preferred examples of such a machine device include turbines, boilers, engines, nozzles, plants, generators, nuclear reactors, aerospace equipment, hydraulic equipment, power transmission equipment, and other equipment.

### [Method for Manufacturing Alloy Product]

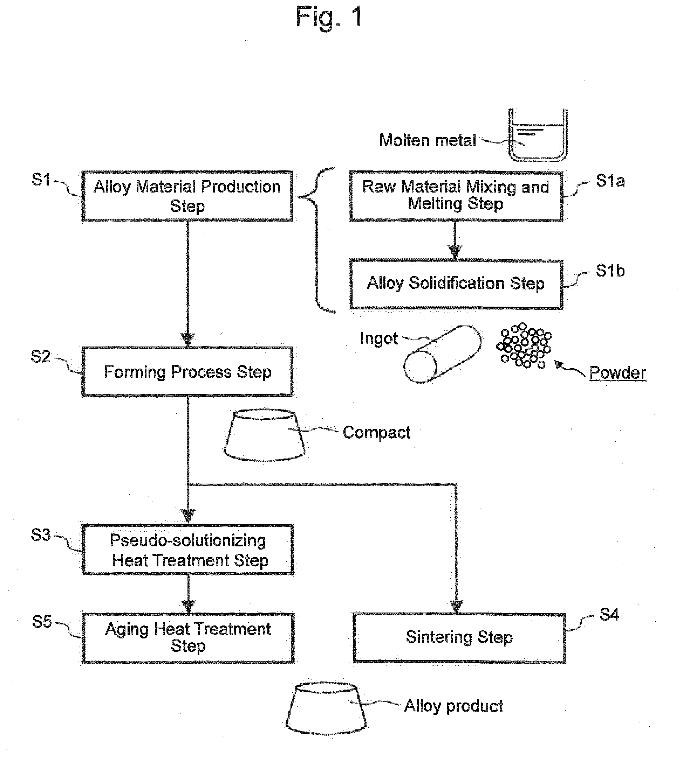

Figure 1 is a schematic process diagram showing an example of a method for manufacturing an alloy product according to the embodiment.

The method for manufacturing an alloy product according to the embodiment schematically includes at least the alloy material production step S1 and the forming process step S2, and optionally includes the pseudo-solutionizing heat treatment step S3 or the sintering step S4 depending on the forming processing process as in an example illustrated in Figure 1. Further, the method for manufacturing an alloy product according to the embodiment may include the aging heat treatment step S5 when optionally including the pseudo-solutionizing heat treatment step S3 as in an example illustrated in Figure 1. Each step will be described in more detail below.

### (Alloy Material Production Step)

In the alloy material production step S1, an alloy material that is a material for an alloy product is produced. The detailed procedures of the alloy material production step S1 are not particularly limited as long as an alloy material, with which a desired alloy product can be manufactured, can be obtained. However, it is a step including a raw material mixing and melting step S1a of mixing raw material metals to yield a desired alloy composition and melting them to obtain a molten metal and an alloy solidification step S1b of solidifying the molten metal to obtain an alloy material.

The raw material mixing and melting step S1a is not particularly limited as long as it is a step of mixing and melting raw material metals such that a molten metal can be obtained. However, it may be a step including, for example, a melting step of mixing raw material metals to reduce the content of impurity components in an alloy (for smelting the alloy) and melting the mixture to obtain a molten metal, an alloy ingot formation step of solidifying the molten metal to form an alloy ingot for remelting, and a remelting step of remelting the alloy ingot for remelting to obtain a cleaned molten metal. The remelting method is not particularly limited as long as it can improve the cleanliness of the alloy, but for example, vacuum arc remelting (VAR) is preferable.

A method for solidifying a molten metal in the alloy solidification step S1b is not particularly limited as long as an alloy material in the form suitable for use in the forming process step S2 (e.g., alloy ingot (ingot) or alloy powder) can be obtained. However, for example, a method for solidifying a molten metal by a casting method to obtain an alloy ingot as an alloy material, a method for scattering a molten metal by an atomization method and solidifying the molten metal to obtain an alloy powder as an alloy material, or the like is preferable.

In the case of obtaining an alloy powder by an atomization method, from the viewpoint of fluidity and fillability of an alloy powder when carrying out a forming process (e.g., powder metallurgy process or additive manufacturing process) using an alloy powder in the subsequent step (forming process step S2), the average particle diameter of the alloy powder is set to preferably in a range of 5 µm to 200 µm, more preferably in a range of 10 µm to 100 µm, still more preferably in a range of 10 µm to 50 µm. Setting the average particle diameter of alloy powder to 5 µm or more allows the fluidity of the alloy powder to be maintained in the forming process step S2, resulting in little impact on the shape accuracy of the formed product. Meanwhile, setting the average particle diameter of the alloy powder to 200 µm or less allows the fillability of the alloy powder to be maintained in the forming process step S2, thereby suppressing the generation of internal voids and surface roughening of the formed product due to worsening fillability. Given the above, the classification step classifying the average particle diameter of the alloy powder to a range of 5 µm to 200 µm may be further carried out after obtaining an alloy powder by the atomization method. Although the classification step is not an essential step, it is preferable to carry out the classification step from the viewpoint of improved usability of the alloy powder. In a case in which the particle diameter distribution of the alloy powder is measured and confirmed to be within the desired range, it can also be considered that the classification step has been performed.

### (Forming Process Step)

In the forming process step S2, a compact having a desired shape is formed from the alloy material obtained in the alloy material production step S1. In the method for manufacturing an alloy product according to the embodiment, an alloy product may be directly manufactured from a compact formed in the forming process step S2.

A method for forming a compact from an alloy material is not particularly limited as long as a compact having a desired shape can be formed. For example, in a case in which the alloy material is an alloy ingot, the method for forming a compact from an alloy material may be a method for forming an alloy workpiece as a compact by carrying out cutting, plasticity processing (e.g., forging, drawing, or rolling), machining (e.g., punching or cutting machining), although it depends on the type of alloy material.

Meanwhile, in a case in which the alloy material is an alloy powder, the method for forming a compact from an alloy material is, for example, preferably the additive manufacturing process or the powder metallurgy process. The additive manufacturing process is not particularly limited, and a conventional process can be used if appropriate. For example, a process of forming an additively manufactured product by performing additive manufacturing of a desired shape with an alloy powder according to the additive manufacturing (AM) method can be mentioned. As a result, a near-net-shape alloy product can be manufactured by locally melting and rapidly solidifying (hereinafter sometimes referred to as "melting-solidification") rather than sintering. The additive manufacturing process is characterized in that a three-dimensional member having a complex shape with mechanical properties comparable to or better than a forged material can be directly manufactured. The AM method is not particularly limited, and a conventional process can be used if appropriate. For example, the selective laser melting (SLM) method, the electron beam melting (EBM) method, the laser metal deposition (LMD) method, the directed energy deposition (DED) method, and the like can be used.

The additive manufacturing process using SLM as the AM method will be described briefly. This additive manufacturing process is an additive manufacturing process of forming an additively manufactured product by repeating an alloy powder bed preparation step of preparing an alloy powder bed having a predetermined thickness by spreading an alloy powder and a laser melting-solidification step of irradiating a predetermined area of the alloy powder bed with a laser beam to locally melt and rapidly solidify the alloy powder in the area.

More specifically, to maximize the density and shape accuracy of the additively manufactured product, for example, the thickness h of the alloy powder bed is selected from a range of 0.02 mm to 0.2 mm, the output P of laser light is selected from a range of 50 W to 1000 W, the laser beam scanning speed S is selected from a range of 50 mm/s to 10000 mm/s, and the laser beam scanning interval L is selected from a range of 0.05 mm to 0.2 mm. The volume energy density E of local melting represented by "E = P / (h × S × L)" is controlled preferably in a range of 20 J/mm³ to 200 J/mm³, more preferably in a range of 40 J/mm³ to 150 J/mm³.

The additively manufactured product manufactured in the laser melting-solidification step is embedded in the alloy powder bed. Therefore, this additive manufacturing process may include a removal step of removing the additively manufactured product from the alloy powder bed following the laser melting-solidification step. A method for removing the additively manufactured product is not particularly limited, and a conventional method can be used. In addition, sandblasting using the alloy powder can be preferably used in the EBM method. Sandblasting using the alloy powder is advantageous in that the removed alloy powder bed can be pulverized together with the blown alloy powder to be reused as an alloy powder.

The powder metallurgy process is not particularly limited, and a conventional process can be used if appropriate. In a case in which the alloy material is an alloy powder, to increase the shape accuracy of a formed product, a compact formed by the additive manufacturing process, the powder metallurgy process, or the like may be further subjected to cutting, plasticity processing, machining, or the like.

### (Pseudo-solutionizing Heat Treatment Step)

In the pseudo-solutionizing heat treatment step S3, pseudo-solutionizing heat treatment is performed on the compact (additively manufactured product) obtained by the additive manufacturing process from the compact (alloy workpiece) or alloy powder formed from the alloy ingot. The compact is maintained at a predetermined temperature for a certain period by heating during pseudo-solutionizing heat treatment. Accordingly, a segregation product remaining in the compact or the composition distribution is homogenized, thereby manufacturing, as an alloy product, an alloy processed piece obtained from an alloy workpiece or an alloy processed product obtained from an additively manufactured product. Currently, there is no academically established knowledge of the phase equilibrium diagram and the like for the alloy material of the present invention, and it is not possible to accurately define the temperature at which a segregation product entirely becomes a solution. For this reason, the name of this heat treatment is referred to as pseudo-solutionizing heat treatment.

The temperature of pseudo-solutionizing heat treatment is not particularly limited; however, for example, it is preferably in a range of 1000°C to 1250°C, more preferably in a range of 1050°C to 1200°C, still more preferably in a range of 1100°C to 1180°C. As long as the temperature of pseudo-solutionizing heat treatment is 1000°C or more, sufficient homogenization is possible. In addition, as long as the temperature of pseudo-solutionizing heat treatment is 1250°C or less, matrix phase crystal grains do not become coarse, improving corrosion resistance and mechanical properties. The atmosphere for pseudo-solutionizing heat treatment is not particularly limited, and it may be the air atmosphere or non-oxidizing atmosphere (atmosphere with virtually no oxygen, such as vacuum, high-purity argon atmosphere, high-purity nitrogen atmosphere, or the like).

The maintaining time of pseudo-solutionizing heat treatment may be set in a range of 0.1 hours to 100 hours as appropriate in consideration of the volume and heat capacity of a subject to be heat treated, heat treatment temperature, and the like. From the viewpoint of controlling the average particle diameter of microscopic particles, it is preferable to allow the subject to be heat treated to pass a temperature range where the intermetallic compound phase tends to grow (e.g., a range of 800°C to 900°C) as quickly as possible throughout the elevated temperature process for the compact during pseudo-solutionizing heat treatment.

The compact is maintained at a predetermined temperature for a certain period by heating and then may be rapidly cooled by air-cooling or the like during pseudo-solutionizing heat treatment.

### (Aging Heat Treatment Step)

In the method for manufacturing an alloy product according to the embodiment, after the pseudo-solutionizing heat treatment step S3, it is also possible to add the aging heat treatment step S5 in which aging heat treatment is performed on the compact (additively manufactured product) obtained by the additive manufacturing process from the compact (alloy workpiece) or alloy powder formed from the alloy ingot. In the aging heat treatment step S5, a subject to be treated in the aging heat treatment may be a compact subjected to pseudo-solutionizing heat treatment. The compact is maintained at a predetermined temperature for a certain period by heating during aging heat treatment. This allows precipitates, such as microscopic particles, to be generated or grow in the matrix phase crystal grains of the compact. Thus, an alloy processed piece obtained from an alloy workpiece or an alloy processed product obtained from an additively manufactured product is manufactured as an alloy product,

The temperature of aging heat treatment is not particularly limited; however, for example, it is preferably in a range of 500°C to 900°C, more preferably in a range of 600°C to 850°C. As long as the temperature of aging heat treatment is 500°C or more, precipitates in the matrix phase crystal grains of the compact may change. In addition, as long as the temperature of pseudo-solutionizing heat treatment is 900°C or less, precipitates are not generated in excess, improving corrosion resistance and mechanical properties. The atmosphere for pseudo-solutionizing heat treatment is not particularly limited, and it may be the air atmosphere or non-oxidizing atmosphere (atmosphere with virtually no oxygen, such as vacuum, high-purity argon atmosphere, high-purity nitrogen atmosphere, or the like).

The maintaining time of aging heat treatment may be set in a range of 0.5 hours to 24 hours as appropriate in consideration of the volume and heat capacity of a subject to be heat treated, heat treatment temperature, and the like. The compact is maintained at a predetermined temperature for a certain period by heating and then may be rapidly cooled by air-cooling or the like during aging heat treatment.

### (Sintering Step)

In the sintering step S4, the compact formed from the alloy powder in the powder metallurgy process is sintered. Accordingly, the alloy sintered product is manufactured as an alloy product. The sintering method is not particularly limited, and a conventional method can be used if appropriate. The sintering method may be a method in which the forming process step S2 and the sintering step S4 are carried out entirely independently (method in which only forming is performed in the forming process step S2 and only sintering is performed in the sintering step S4) or a method in which the forming process step S2 and the sintering step S4 are performed in an integrated manner as in, for example, the hot isostatic pressing (HIP) method. The sintering step S4 may be omitted for the additively manufactured product described above. Meanwhile, HIP can be carried out. It is also possible to reduce voids that can be present in the additively manufactured product by HIP.

The sintering temperature is not particularly limited; however, it may be, for example, a temperature range the same as in the pseudo-solutionizing heat treatment step S3. In other words, the sintering temperature is, for example, preferably in a range of 1000°C to 1250°C, more preferably in a range of 1050°C to 1200°C, still more preferably in a range of 1100°C to 1 180°C. After the sintering step, including HIP, it is preferable to perform cooling, such as air-cooling, as quickly as possible. In a case in which a sufficient cooling rate cannot be obtained due to restrictions on equipment used in the sintering step, the above-described pseudo-solutionizing heat treatment step S3 may be added after the sintering step to perform rapid cooling by air-cooling or the like.

### (Finishing Step)

The method for manufacturing an alloy product according to the embodiment may further include a finishing step of performing surface finishing on the alloy product obtained in the pseudo-solutionizing heat treatment step S3 or the sintering step S4 if necessary, although not shown in Figure 1.

### EXAMPLES

The present invention will be specifically described based on Examples and Comparative Examples below. The present invention is not limited to these Examples.

### [Experiment 1]

### (Production of Alloy Materials A1 to A4)

First, raw material metals were mixed with nominal compositions of alloy materials A1 to A4, shown in Table 1 below, thereby preparing mixed raw materials for producing alloy materials A1 to A4, respectively. Next, each of the mixed raw materials of alloy materials A1 to A4 was placed on a water-cooled copper hearth in a reduced pressure Ar atmosphere and melted using an automatic arc melting furnace (manufactured by DIAVAC LIMITED) by the arc melting method, thereby obtaining a molten metal. Alloy ingots (about 34 mm in diameter, about 50 g) were produced by solidifying each molten metal. Further, to homogenize the alloy ingots, the alloy ingots were repeatedly remelted six times while each alloy ingot was inverted, thereby producing alloy materials A1 to A4 which are alloy ingots respectively (alloy material production step).

**[Table 1]**

| Type | Nominal composition [at%] | | | | | | | Remarks |
|---|---|---|---|---|---|---|---|---|
| | Co | Cr | Fe | Ni | Ti | Mo | B | |
| A1 | 30.93 | 19.71 | 14.54 | 23.48 | 8.92 | 2.37 | 0.05 | Example |
| A2 | 30.88 | 19.71 | 14.54 | 23.48 | 8.92 | 2.37 | 0.1 | Example |
| A3 | 30.83 | 19.71 | 14.54 | 23.48 | 8.92 | 2.37 | 0.15 | Comparative Example |
| A4 | 30.98 | 19.71 | 14.54 | 23.48 | 8.92 | 2.37 | - | Comparative Example |

| | | | | | | | | |
|---|---|---|---|---|---|---|---|---|
| "Double-underlined parts are values outside the content range of each component element according to the present invention. | | | | | | | | |

As shown in Table 1, each of alloy materials A1 and A2 is an HEA alloy material containing B (boron) within the content range according to the present invention (Example), alloy material A3 is an HEA alloy material containing B (boron) outside the content range according to the present invention (Comparative Example), and alloy material A4 is an HEA alloy material free of B (Comparative Example).

### (Production of Alloy Processed Pieces W1 to W4)

Subsequently, each of alloy materials A1 to A4 was machine-processed to form an alloy workpiece as a compact (10 mm × 10 mm × 40 mm rectangular parallelepiped) (forming process step). Next, each of the alloy workpieces formed from alloy materials A1 to A4 was subjected to pseudo-solutionizing heat treatment (pseudo-solutionizing heat treatment step). In the pseudo-solutionizing heat treatment, the alloy workpieces were maintained at 1 120°C for 1 hour in the air atmosphere and then rapidly cooled. As the rapid cooling method, air cooling with an average cooling rate of about 10°C/s from 800°C to 900°C was adopted. Accordingly, alloy processed pieces W1 to W4 were manufactured as alloy products from the alloy materials A1 to A4, respectively. The pseudo-solutionizing heat treatment step can be carried out at 1000°C to 1180°C for a time period in a range of 0.1 hours or more and 100 hours or less.

### [Experiment 2]

### (Production of Alloy Powders P1 to P4)

First, raw material metals were mixed with nominal compositions of alloy powders P1 to P4, shown in Table 2 below, thereby preparing mixed raw materials for producing alloy powders P1 to P4, respectively. Next, for each of the mixed raw materials of alloy powders P1 to P4, a high-frequency melting furnace was used to melt the mixed raw material, thereby obtaining a molten metal (raw material mixing and melting step). Next, each molten metal was scattered and solidified by a gas atomization method, thereby obtaining an alloy powder as an alloy material (alloy solidification step).

Next, each of the obtained alloy powders was classified by a sieve to select particles having a particle diameter of 20 µm or more and 45 µm or less, thereby producing alloy powders P1 to P4 (alloy material production step). When the particle diameter distribution of alloy powders P1 to P4 was measured using a laser diffraction particle diameter distribution analyzer, the average particle diameter of each alloy powder was about 30 µm.

**[Table 2]**

| Type | Nominal composition [at%] | | | | | | | | Remarks |
|---|---|---|---|---|---|---|---|---|---|
| | Co | Cr | Fe | Ni | Ti | Mo | B | Ta | |
| P1 | 30.98 | 19.71 | 14.54 | 23.48 | 8.92 | 2.31 | - | - | Comparative Example |
| P2 | 30.93 | 19.71 | 14.54 | 23.48 | 8.92 | 2.37 | 0.05 | - | Example |
| P3 | 34.40 | 19.71 | 14.54 | 23.47 | 4.46 | 2.37 | 0.05 | 1.00 | Example |
| P4 | 34.45 | 19.75 | 14.50 | 23.50 | 4.41 | 2.39 | - | 1.01 | Comparative Example |

| | | | | | | | | | |
|---|---|---|---|---|---|---|---|---|---|
| *Double-underlined parts are values outside the content range of each component element according to the present invention. | | | | | | | | | |

As shown in Table 2 above, the alloy powder P1 is an HEA alloy powder (Comparative Example) that does not contain B and was prepared as a reference sample. The alloy powder P2 is an HEA alloy powder (Example) containing B, and the alloy powder P3 is an HEA alloy powder (Example) containing B and Ta. The alloy powder P4 is an HEA alloy powder (Comparative Example) that contains Ta but not B. A prototype powder was also produced in which the Ti content was increased to 10.7 at% from the composition of alloy powder P2, but this resulted in cracking during additive manufacturing, as described below. Based on the results of this prototype production, the upper limit of the Ti content was set at 10 at%.

### (Production of Alloy Processed Products M1 to M5)

Subsequently, each of the alloy powders P1 to P4 was formed into an additively manufactured product (a prismatic material with 25 mm length × 25 mm width × 70 mm height whose height direction is the stacking direction) as a compact using an additive manufacturing system (model: EOSINT M280 manufactured by EOS GmbH) by the SLM method. At this time, the SLM conditions were such that the thickness h of the alloy powder bed was 0.04 mm, and the laser beam output P, the laser beam scanning speed S, and the laser beam scanning interval L were controlled to yield a volume energy density E of 40 J/mm³ or more and 100 J/mm³ or less.

Next, each of the additively manufactured products formed from the alloy powders P1 to P4 was removed from the alloy powder bed. Then, each of the additively manufactured products was subjected to pseudo-solutionizing heat treatment (pseudo-solutionizing heat treatment step). In the pseudo-solutionizing heat treatment, the additively manufactured products were maintained at 1120°C for 3 hours in the air atmosphere and then rapidly cooled. As the rapid cooling method, air cooling with an average cooling rate of about 10°C/s from 800°C to 900°C was adopted. Accordingly, alloy processed products M1 to M4 were manufactured as alloy products from the alloy powders P1 to P4, respectively. The pseudo-solutionizing heat treatment step can be carried out at 1000°C to 1180°C for a time period in a range of 0.1 hours or more and 100 hours or less. In addition, aging heat treatment, during which the additively manufactured product was maintained at 650°C for 8 hours in the air atmosphere, was further performed for the alloy processed product M3 obtained from the alloy powder P3, which was subjected to pseudo-solutionizing heat treatment, followed by cooling in a furnace. Thus, an alloy processed product M5 was also obtained.

### [Experiment 3]

### (Testing and Evaluation of alloy Processed Pieces W1 to W4 and Alloy Processed Products M1 to M5)

### (Evaluation of Mechanical Properties)

Each of the alloy processed pieces (alloy products) W1 to W4 and the alloy processed products (alloy products) M1 to M5 was processed into test pieces having a predetermined shape. Tensile strength and rupture elongation were measured and evaluated as mechanical properties of each test piece in a high-temperature environment of 700°C. The evaluation method complies with ASTM E21, and the tensile rate was 0.5%/min until the proof stress and 5%/min after the proof stress until rupture. For the alloy processed pieces W1 to W4, in terms of tensile strength, a tensile strength of 900 MPa or more was evaluated as "Excellent," a case of 800 MPa or more was evaluated as "Pass," and a case of less than 800 MPa was evaluated as "Fail." In terms of rupture elongation, a rupture elongation of 8% or more was evaluated as "Excellent," a case of 7% or more was evaluated as "Pass," and a case of less than 7% was evaluated as "Fail." The alloy processed products M1 to M5 are expected to have higher properties because the solidified structure is finer than that of the alloy processed pieces. Therefore, regarding the tensile strength, a case of 1000 MPa or more was evaluated as "Pass," and a case of less than 1000 MPa was evaluated as "Fail." Regarding the rupture elongation, a case of 10% or more was evaluated as "Pass," and a case of less than 10% was evaluated as "Fail." The results are shown in Table 3.

**[Table 3]**

| Type | | Content of B [at%] | Content of Ta [at%] | Mechanical properties in the 700°C environment | | | | Remarks |
|---|---|---|---|---|---|---|---|---|
| | | | | Tensile strength | | Rupture elongation | | |
| | | | | Measured value [MPa] | Evaluation | Measured value [%] | Evaluation | |
| Alloy processed piece | W1 | 0.05 | - | 847 | Pass | 7.0 | Pass | Example |
| | W2 | 0.1 | - | 930 | Excellent | 8.3 | Excellent | Example |
| | W3 | 0.15 | - | 904 | Excellent | 6.9 | Fail | Comparative Example |
| | W4 | - | - | 739 | Fail | 4.2 | Fail | Comparative Example |
| Alloy processed product | M1 | - | - | 955 | Fail | 0.3 | Fail | Comparative Example |
| | M2 | 0.05 | - | 1185 | Pass | 11.5 | Pass | Example |
| | M3 | 0.05 | 1.00 | 1039. | Pass | 15.3 | Pass | Example |
| | M4 | - | 1.01 | 944 | Fail | 9.6 | Fail | Comparative Example |
| | M5 | 0.05 | 1.00 | 1043 | Pass | 14.7 | Pass | Example |

| | | | | | | | | |
|---|---|---|---|---|---|---|---|---|
| *Double-underlined parts are values outside the content range of each component element according to the present invention. | | | | | | | | |

In addition, the mechanical properties (tensile strength and rupture elongation) of the test pieces having a predetermined shape of the alloy processed products (alloy products) M1 to M5 at each of environmental temperatures of room temperature to 850°C were measured and evaluated. The evaluation method was the same as above. The results are shown in Table 4.

**[Table 4]**

| | | Mechanical properties | Environmental temperature [°C] | | | | Remarks |
|---|---|---|---|---|---|---|---|
| | | | 22 | 600 | 700 | 850 | |
| Alloy processed product | M1 | Tensile strength [MPa] | 1556 | 1336 | 955 | 464.5 | Comparative Example |
| | | Rupture elongation [%] | 26.6 | 14 | 0.3 | 0.1 | |
| | M2 | Tensile strength [MPa] | 1404 | 1198 | 1185 | 514 | Example |
| | | Rupture elongation [%] | 34.1 | 25.3 | 11.5 | 0.1 | |
| | M3 | Tensile strength [MPa] | 1240 | 990 | 1039 | 687 | Example |
| | | Rupture elongation [%] | 38.6 | 34.6 | 15.3 | 6.7 | |
| | M4 | Tensile strength [MPa] | 1217 | - | 944 | - | Comparative Example |
| | | Rupture elongation [%] | 44.7 | - | 9.6 | - | |
| | M5 | Tensile strength [MPa] | 1408 | 1106 | 1043 | 645 | Example |
| | | Rupture elongation [%] | 31.0 | 31.2 | 14.7 | 6.2 | |

As shown in Table 3 above, it is understood that the alloy processed pieces W1 and W2 containing B within the content range according to the present invention had improved mechanical properties in a high-temperature environment compared to the alloy processed piece W4 free of B. In addition, the alloy processed piece W3 containing B outside the content range (0.15 at% or more) according to the present invention had a lower rupture elongation than the alloy processed pieces W1 and W2. In addition, it is understood that the alloy processed products M2 and M3 (Examples) containing B have improved mechanical properties in a high-temperature environment compared to the alloy processed product M1 (Comparative Example) free of B.

As shown in Table 4, for the alloy processed product M1, the mechanical properties of the test piece significantly decreased when the environmental temperature was 700° C or higher. In addition, although the alloy processed product M4 had better ductility than the alloy processed product M1, its mechanical properties similarly decreased when the environmental temperature reached 700°C. On the other hand, for the alloy processed products M2 and M3, it was confirmed that the mechanical properties of the test piece tended to deteriorate but could be maintained even at temperatures exceeding 700°C. For M2 and M3, values of rupture elongation at 700°C, which are, to an extent, suitable for practical use, were obtained. Furthermore, it was found that in M3 containing both B and Ta, the decrease in rupture elongation was suppressed even at a higher temperature of 850°C. M5, in which M3 was subjected to aging heat treatment, exhibited the effect of improving strength at low temperatures while maintaining excellent mechanical properties at high temperatures equivalent to M3.

### (Microstructure Observation 1)

First, the alloy processed pieces W1 to W4 and the alloy processed products M1 to M5 were each subjected to X-ray diffraction (XRD) measurement to identify the crystal structure of the matrix phase crystal grains and the precipitated phase. As a result, it was determined that in all of the alloy processed pieces W1 to W4 and the alloy processed products M1 to M5, the crystal structure of the matrix phase crystal grains was mainly composed of face-centered cubic (FCC) crystals. However, in X-ray diffraction measurement, it is difficult to completely distinguish between face-centered cubic (FCC) crystals and simple cubic (SC) crystals; thus, it cannot be concluded that simple cubic crystals are not included.

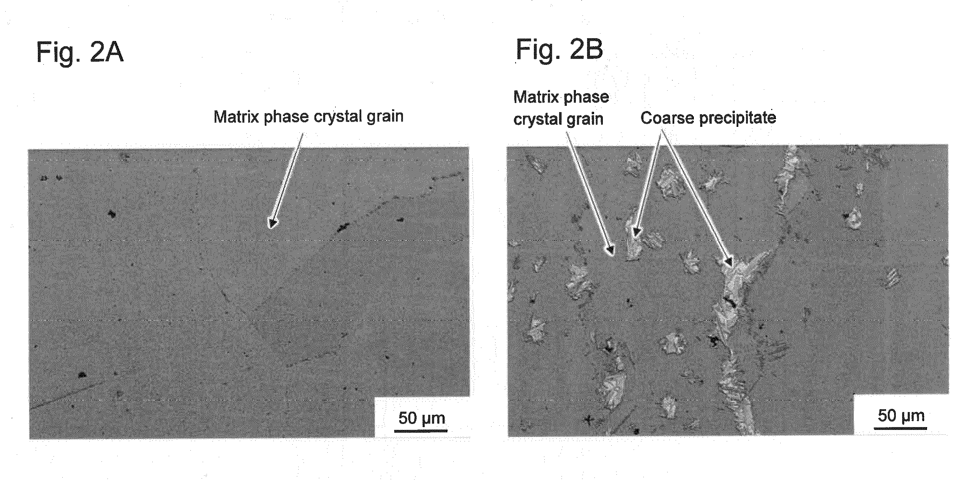

Next, the alloy processed pieces W1 to W4 and the alloy processed products M1 to M5 were each cut, and the cross-section of each cut piece was mirror-polished. Electrolytic etching treatment was performed on the cross-section using a 10% by mass oxalic acid aqueous solution under an electric field condition of 3V × 0.2 A. Then, SEM observation was performed on the treated cross-section of each cut piece. A precipitate becomes the origin of fracture when stress is applied to an alloy product. The larger the size of the precipitate, the more likely it is to become the origin of fracture. In view of this, when observing the treated cross-section in a range of 400 µm × 300 µm, a case in which no precipitate having a size of 10 µm or more was observed in this observation range was evaluated as "Excellent," a case in which no coarse precipitate having a size of 50 µm or more was observed in the observation range was evaluated as "Pass," and a case in which a coarse precipitate having a size of 50 µm or more was observed was evaluated as "Fail." The results are shown in Table 5. Figure 2A is a secondary electron image obtained by SEM observation of the treated cross-section of the alloy processed piece W1. Figure 2B is a secondary electron image obtained by SEM observation of the treated cross-section of the alloy processed piece W3.

**[Table 5]**

| Type | | Content of B [at%] | Content of Ta [at%] | Precipitate size | Remarks |
|---|---|---|---|---|---|
| | | | | Evaluation | |
| Alloy processed piece | W1 | 0.05 | - | Excellent | Example |
| | W2 | 0.1 | - | Pass | Example |
| | W3 | 0.15 | - | Fail | Comparative Example |
| | W4 | - | - | Excellent | Comparative Example |
| Alloy processed product | M1 | - | - | Excellent | Comparative Example |
| | M2 | 0.05 | - | Excellent | Example |
| | M3 | 0.05 | 1.00 | Excellent | Example |
| | M4 | - | 1.01 | Excellent | Comparative Example |
| | M5 | 0.05 | 1.00 | Excellent | Example |

| | | | | | |
|---|---|---|---|---|---|
| *Double-underlined parts are values outside the content range of each component element according to the present invention. | | | | | |

As shown in Table 5, no coarse precipitate was observed in the cut pieces of the alloy processed pieces W1 and W2. In particular, as shown in Figure 2A, the number of precipitates in the cut piece of the alloy processed piece W1 was 1 or less per treated cross-sectional area of 400 µm × 300 µm, which was hardly observed. On the other hand, as shown in Table 5 and Figure 2B, coarse precipitates having a size of 50 µm or more were observed in the cut piece of the alloy processed piece W3. When such coarse precipitates are observed, there is a possibility that the mechanical properties under the room temperature environment may deteriorate. If an alloy material with a composition that results in such coarse precipitates is applied to the additive manufacturing process, cracks due to coarse precipitates are likely to occur during additive manufacturing. Thus, such an alloy material is unsuitable for the additive manufacturing process. In addition, the alloy processed piece W4 and the alloy processed products M1 and M4 do not generate precipitates but have poor mechanical properties at high temperatures.

### (Microstructure Observation 2)

Regarding the alloy processed product M2, high-magnification observation was performed using a scanning transmission electron microscope (STEM) to evaluate the microscopic particles in the matrix phase crystal grains.

First, one surface of the cut piece of the alloy processed product M2 obtained above was mirror-polished, and a test piece having a thickness of about 100 nm was cut from the polished surface by a microsampling method using a focused ion beam (FIB). At this time, the FB-2100 model manufactured by Hitachi High-Tech Corporation was used for the microsampling method. Next, this test piece was observed using STEM. The STEM observation conditions were as follows.

### <Conditions for STEM Observation>

Sample Thickness: 100 nm
Device model: JEM-ARM200F manufactured by JEOL Ltd.
Acceleration Voltage: 200 kV

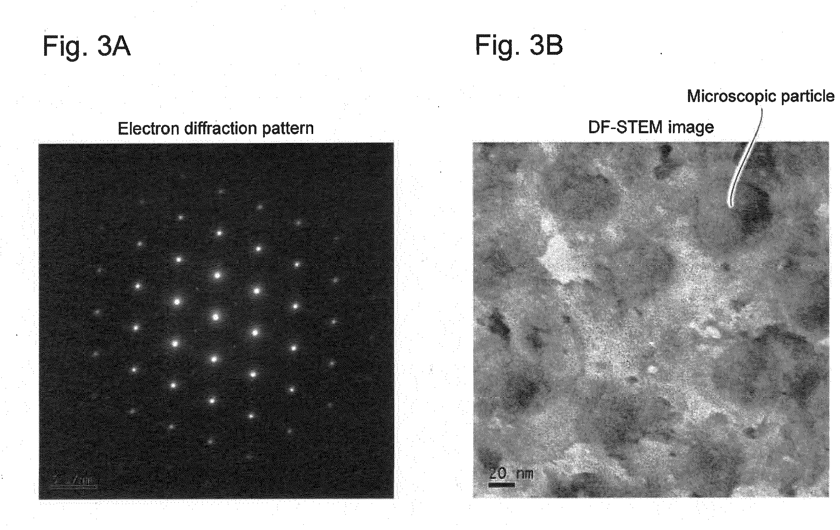

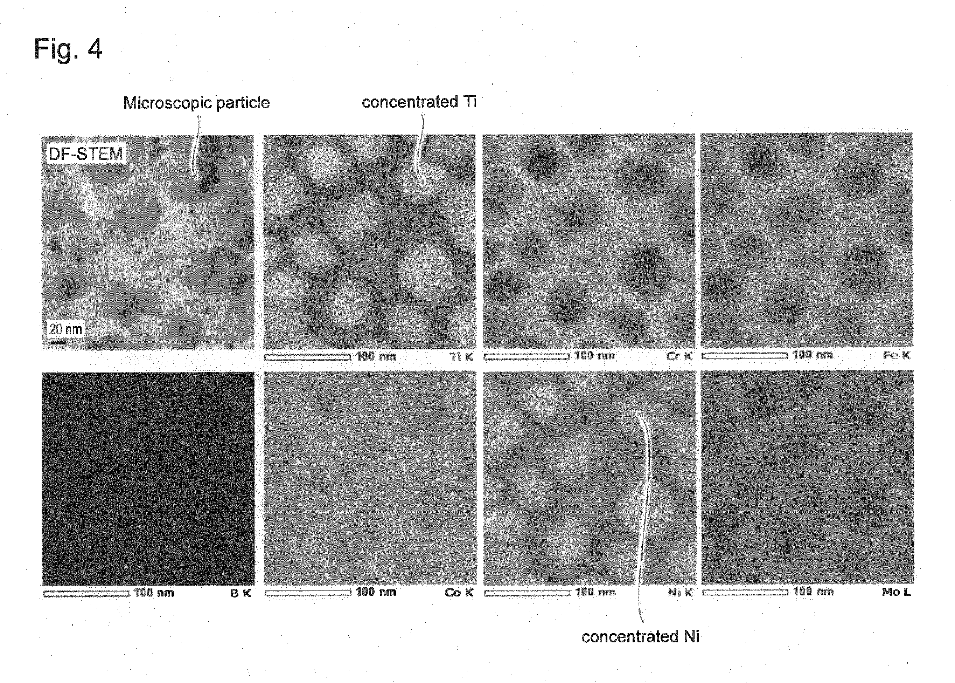

Figure 3A is an electron diffraction pattern of matrix phase crystal grains obtained by STEM observation of the alloy processed product M2. Figure 3B is a dark field image (DF-STEM) of matrix phase crystal grains obtained by STEM observation of the alloy processed product M2. In addition, Figure 4 shows images each indicating the results of the elemental mapping of microscopic particles in the matrix phase crystal grains of the alloy processed product M2 using energy dispersive X-ray spectroscopy (EDX).

From the electron diffraction pattern in Figure 3A, a pattern derived from the face-centered cubic (FCC) phase and a pattern derived from the γ' phase can be confirmed. From the dark-field image in Figure 3B, it can be confirmed that the maximum diameter (maximum length) of each of microscopic particles is about 50 to 60 nm with almost no variation and that microscopic particles having an average particle diameter of about 54 nm are dispersed. The maximum diameter of each of five microscopic particles was measured in the observed image, and the average value was determined to be the average particle diameter. Further, the elemental mapping results shown in Figure 4 confirm that Ni and Ti are more concentrated in the microscopic particles than in other parts of matrix phase crystal grains. Such microscopic particles are believed to be the γ' phase observed in the electron diffraction pattern. The γ' phase contributes to improving mechanical properties by providing resistance to dislocation propagation in crystal grains. High-magnification observation using STEM was also carried out for the alloy processed products M3 and M5. As a result, the microstructure consisting of matrix phase crystal grains composed of a similar FCC phase and microscopic particles containing concentrated Ni and Ti was confirmed.

### (Microstructure Observation 3)

Qualitative evaluation of elemental distribution by secondary ion mass spectroscopy (SIMS) was performed to evaluate the distribution of B in the matrix phase crystal grain boundaries of the alloy processed products M1 to M5.

First, one surface of the cut piece of each of the alloy processed products M1 to M5 obtained above was mirror-polished and observed by SIMS. The SIMS observation conditions were as follows.

### <Conditions for SIMS Observation>

Device model: Secondary ion mass spectrometer IMS-7F manufactured by AMETEK CAMECA
Primary ion conditions: Cs⁺, 15 kV
Analysis area: 100 µm × 100 µm
Secondary ion polarity: Negative
Element to be detected: B (detected as BO₂⁻ ion)

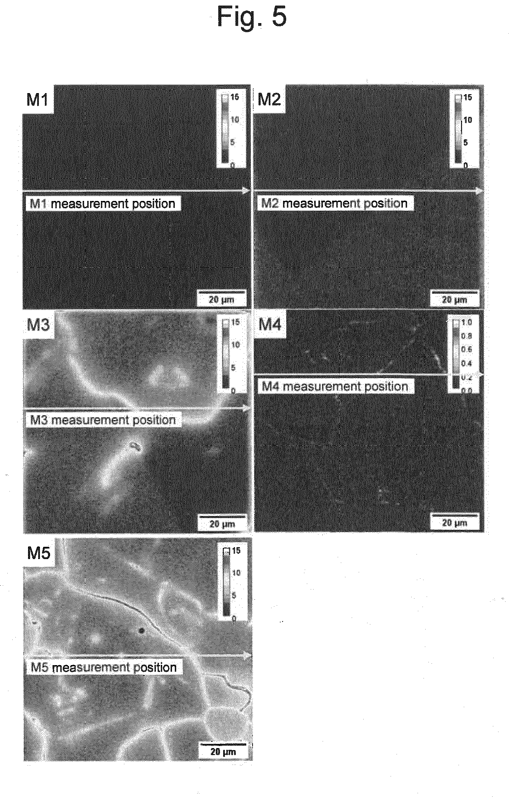

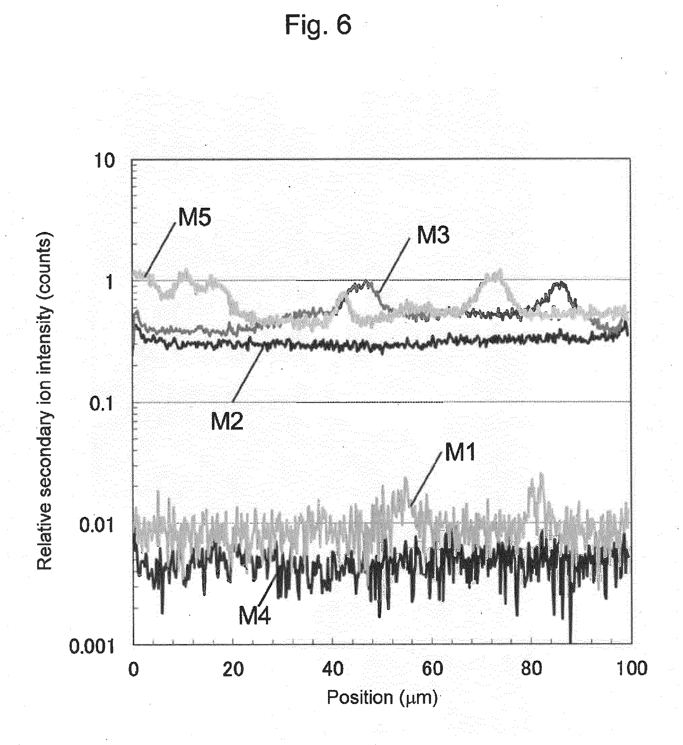

Figure 5 shows images each representing the BO₂⁻ ion intensity distribution obtained by SIMS observation of the alloy processed products M1 to M5. Figure 6 is a graph showing the BO₂⁻ ion intensity distribution at each position along the arrow in each image of Figure 5. As the absolute value of ion intensity depends on the measurement conditions of the device or the like, in this study, each sample was observed under measurement conditions similar to the SIMS observation conditions described above, and a relative qualitative evaluation was performed based on the ion intensity ratio obtained at that time.

Figures 5 and 6 confirmed that in M2, M3, and M5, B contained in the corresponding raw material powders (P2 and P3) is included in the processed product, and B exists at an overall concentration at least 10 times higher than that of M1 and M4 obtained from raw material powders (P1 and P4) free of B. In addition, an uneven distribution of B at grain boundaries was observed in M3 and M5 obtained from the powder (P3) containing B and Ta. Even in the powder (P4) containing only Ta but not B, uneven distribution of B occurred at the grain boundaries; however, the ion intensity ratio was low, and the amount of uneven distribution was small. The raw material powders (P1 and P4) free of B have a low relative secondary ion intensity of B. This corresponds to the fact that the B-free raw material powders (P1 and P4) do not contain B in their nominal composition; however, they contain B as an impurity on the order of ppm in practice. The uneven distribution of B occurs even in the powder (P4) free of B. This is because although the powder (P4) does not contain B in its nominal composition, it contains B as an impurity on the order of ppm in practice. As described above, it was confirmed that M2, M3, and M5, which showed excellent mechanical properties at 700°C in Table 3, have a high concentration of B, especially at the grain boundaries, compared to the other M1 and M4. It is thought that the high-temperature mechanical properties were improved because B present in the grain boundaries acted as resistance to grain boundary sliding, which is a deformation mode at high temperatures.

The above-described embodiment and experimental examples are described to aid understanding of the present invention, and the present invention is not limited only to the specific configurations described. For example, it is possible to replace some of the configurations of the embodiment with configurations that are common technical knowledge of those skilled in the art, or it is also possible to add configurations that are common technical knowledge of those skilled in the art to the configurations of the embodiment. In other words, in the present invention, it is possible to delete, replace with other configurations, or add different configurations to some of the configurations of the embodiment and experimental examples of the present description without departing from the technical idea of the invention.

All publications, patents and patent applications cited in the present description are incorporated herein by reference in their entirety.

## Claims

1. An alloy material **characterized by** containing each of Co, Cr, Fe, and Ni in a range of 5 at% to 40 at%, Mo in a range of more than 0 at% and 8 at% or less, Ti in a range of 1 at% to 10 at%, B in a range of more than 0 at% and less than 0.15 at%, and at least one of Ta and Nb at 4 at% or less, or none of Ta and Nb with a remainder consisting of inevitable impurities.

2. The alloy material according to claim 1, **characterized by** containing the B in a range of 0.03 at% to 0.12 at%.

3. The alloy material according to claim 1 or 2, **characterized by** containing the at least one of Ta and Nb at 4 at% or less.

4. The alloy material according to claim 3, **characterized in that** the Ti and the at least one of Ta and Nb are contained at 3 at% to 10 at% in total.

5. The alloy material according to any one of claims 1 to 4, **characterized by** containing the Co in a range of 25 at% to 38 at%, the Cr in a range of 16 at% to 23 at%, the Fe in a range of 12 at% to 20 at%, the Ni in a range of 17 at% to 28 at%, the Mo in a range of 1 at% to 7 at%, and the Ti in a range of 2 at% to 9 at%.

6. An alloy product using the alloy material according to any one of claims 1 to 5, **characterized in that**
microscopic particles having an average particle diameter of 130 nm or less are dispersed and precipitated in matrix phase crystal grains of the alloy product.

7. A machine device provided with the alloy product according to claim 6.
